# EUROPEAN PATENT APPLICATION

(11) **EP 4 362 185 A1**
(43) Date of publication of application: **01.05.2024**
(21) Application number: 22898905.9
(22) Date of filing: 09.11.2022
(51) Int. Cl.: H01M 50/204, H01M 50/24

(54) **BATTERY PACK AND DEVICE INCLUDING SAME**

(30) Priority: 24.11.2021 KR 20210163385
(71) Applicant: LG Energy Solution, Ltd., Seoul 07335 (KR)
(72) Inventor: SEOL, Jae Jung, Daejeon 34122 (KR); YOON, Seog Jin, Daejeon 34122 (KR); YANG, Kun Joo, Daejeon 34122 (KR)
(74) Representative: Goddar, Heinz J.
(86) International application number: PCT/KR2022/017570
(87) International publication number: WO 2023/096223

(57) **Abstract**

The present disclosure relates to a battery pack and a device including the same, and a battery pack according to one embodiment of the present disclosure includes a plurality of battery modules; and a pack case that houses the plurality of battery modules, and includes a first plate provided while covering one surface of the plurality of battery modules and a second plate provided while covering the other surface of the plurality of battery modules, wherein a first gasket is located along an edge of the first plate, wherein a second gasket is located along an edge of the second plate, and wherein the first gasket and the second gasket are located to overlap each other in a region where one edges of the first plate and the second plate come into contact with each other.

## Description

### [TECHNICAL FIELD]

### Cross Citation with Related Application(s)

This application claims the benefit of Korean Patent Application No. 10-2021-0163385 filed on November 24, 2021 with the Korean Intellectual Property Office, the entire contents of which are incorporated herein by reference.

The present disclosure relates to a battery pack and a device including the same, and more particularly, to a battery pack which is improved in waterproof and dustproof performance, and a device including the same.

### [BACKGROUND]

With the technology development and increased demand for mobile devices, demand for secondary batteries as energy sources has been rapidly increasing. A variety of researches on batteries capable of meeting various needs have been carried out accordingly.

Also, the secondary battery has attracted considerable attention as a power source for an electric vehicle (EV), a hybrid electric vehicle (HEV), a plug-in hybrid electric vehicle (P-HEV) and the like, which have been developed to solve air pollution and the like, caused by existing gasoline and diesel vehicles using fossil fuel.

Therefore, electric vehicles (EVs) that can be operated only by a battery alone, hybrid electric vehicles (HEVs) that use a combination of a battery and an existing engine, and the like have been developed, and some vehicles are commercially available. As a power source of EVs, HEVs, and the like, a secondary battery is mainly used. However, recently, research into lithium secondary batteries having high energy density, high discharge voltage and output stability is actively underway.

When such a secondary battery is used as a power source of a vehicle, the secondary battery is used in the form of a battery pack including a plurality of battery modules or battery module assemblies. The vehicle battery pack is configured to locate a gasket made of a rubber at a joint portion between the cases to seal the battery pack.

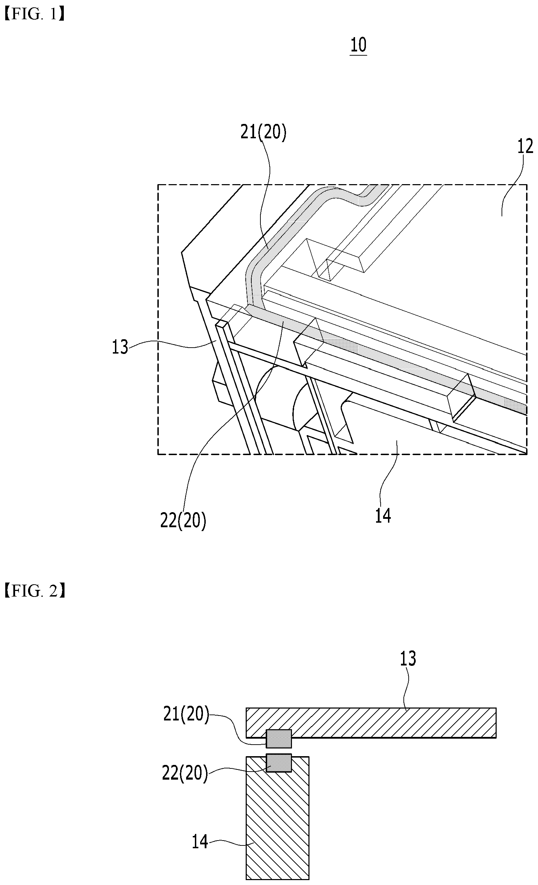

Fig. 1 is a diagram showing a conventional battery pack. Fig. 2 is a diagram schematically showing a cross section where plates constituting the battery pack of Fig. 1 are coupled.

Referring to Figs. 1 and 2, a conventional battery pack 10 includes a first side surface plate 13 and a second side surface plate 14 constituting one surface of the pack case. The first side surface plate 13 and the second side surface plate 14 each include a gasket 20. Specifically, a first gasket 21 may be located along an edge of the first side surface plate 13, and a second gasket 21 may be located along an edge of the second side surface plate 14.

Gasket 20 may be made of a rubber. The first gasket 21 and the second gasket 22 made of a rubber may overlap at one edge where the first side surface plate 13 and the second side surface plate 14 overlap. In this case, a tolerance may be formed between the first gasket 21 and the second gasket 22, and moisture, dust or the like may flow into the battery pack 10 from the outside, which causes a problem that the waterproof grade cannot be satisfied..

### [DETAILED DESCRIPTION OF THE INVENTION]

### [Technical Problem]

The present disclosure has been designed to solve the above-mentioned problems and an object of the present disclosure is to provide a battery pack which is improved in assembling property and waterproof performance, and a device including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a plurality of battery modules; and a pack case that houses the plurality of battery modules, and includes a first plate provided while covering one surface of the plurality of battery modules and a second plate provided while covering the other surface of the plurality of battery modules, wherein a first gasket is located along an edge of the first plate, wherein a second gasket is located along an edge of the second plate, and wherein the first gasket and the second gasket are located to overlap each other in a region where one edges of the first plate and the second plate come into contact with each other.

The first gasket and the second gasket may have mutually different elastic hardness.

The elastic hardness of the first gasket may be larger than the elastic hardness of the second gasket.

A degree of shape change of the first gasket may be smaller than a degree of shape change of the second gasket.

The first gasket may be fitted into a first groove that is excavated to a certain depth along an edge of the first plate.

A shape of the first gasket may correspond to a shape of an edge of the first plate.

The shape of the first gasket may correspond to a shape of the first groove of the first plate.

The first gasket may be made of an elastic material.

The first gasket may be made of a rubber.

The second gasket may be provided in a second groove that is excavated to a certain depth along an edge of the second plate.

The second gasket may be formed by being applied to the second groove and then cured. The second gasket may correspond to a shape of the second groove.

The second gasket may be made of a resin.

The second gasket may be made of a CIPG (Cured In Place Gasket) material.

According to another embodiment of the present disclosure, there is provided a device comprising the above-mentioned battery pack.

### [Advantageous Effects]

According to embodiments of the present disclosure, gaskets made of different materials are overlapped to form a double sealing structure, thereby capable of improving waterproof and dustproof performance.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a conventional battery pack;
Fig. 2 is a diagram schematically showing a cross section where plates constituting the battery pack of Fig. 1 are coupled;
Fig. 3 is a perspective view of a battery pack according to an embodiment of the present disclosure;
Fig. 4 is an exploded perspective view of a battery pack according to an embodiment of the present disclosure;
Fig. 5 is a diagram showing a first gasket located on one surface of a battery pack case;
Fig. 6 is a diagram showing a second gasket located on one surface of the battery pack case;
Fig. 7 is a diagram showing a state in which plates constituting the battery pack of Fig. 4 are coupled; and
Fig. 8 is a diagram schematically showing a cross section in which plates constituting the battery pack of Fig. 7 are coupled.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

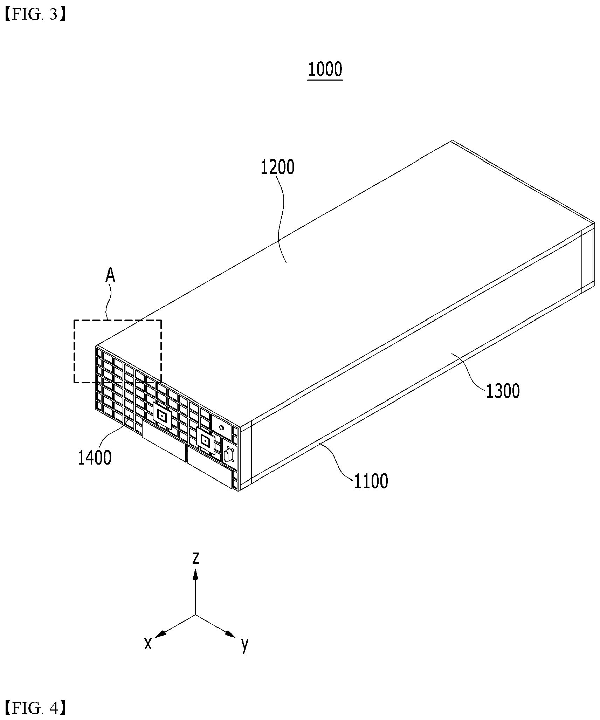

Fig. 3 is a perspective view of a battery pack according to an embodiment of the present disclosure. Fig. 4 is an exploded perspective view of a battery pack according to an embodiment of the present disclosure.

Referring to Figs. 3 and 4, the battery pack 1000 according to an embodiment of the present disclosure includes a pack case that houses a plurality of battery modules 100. The pack case may include a lower plate 1100 to which a plurality of battery modules 100 are mounted, an upper plate 1200 provided while covering the upper surface (z-axis direction) of the plurality of battery modules 100, a first side surface plate 1300 provided while covering both side surfaces (y-axis direction and -y-axis direction) of the plurality of battery modules 100, and a second side surface plate 1400 provided while covering the front surface and rear surface of the plurality of battery modules 100.

The battery pack 1000 according to an embodiment of the present disclosure may include a first gasket 2000 that is mounted on a first side surface plate 1300 provided while covering one surface of a plurality of battery modules 100, and a second gasket 3000 that is mounted on the second side surface plate 1400 provided while covering the other surface of the plurality of battery modules 100.

The battery module 100 may include a battery cell stack in which a plurality of battery cells are stacked along a predetermined direction, and a module frame. The module frame may include an upper frame and a lower frame, and the battery cell stack can be mounted between the upper frame and the lower frame to configure the battery module 100. However, the module frame is not limited to the contents described above, and may be a mono frame in the form of a metal plate material in which the upper and lower surfaces and both side surfaces are integrated.

Here, since the type of the battery cell is not particularly limited, it may be a pouch-type secondary battery or a prismatic secondary battery, but is preferably a pouch-type secondary battery.

A heat sink may be provided on the lower plate 1100, and at least one battery module 100 may be mounted on the heat sink. The size of the heat sink may correspond to the size of the battery module 100, or may be larger than the size of the battery module 100.

The upper plate 1200 may be a plate configured to cover upper parts of the plurality of battery modules 100. The upper plate 1200 may have a size corresponding to that of the lower plate 1100.

The first side surface plate 1300 may be a plate that covers both side surfaces of the plurality of battery modules 100. Opposing one edges of the first side surface plate 1300 correspond to one edge of the lower plate 1100 and one edge of the upper plate 1200, respectively, which can be fastened using a fastening member or coupled by a method such as welding.

The first side surface plate 1300 includes a first groove 1310 to which the first gasket 2000 is mounted. The first groove 1310 may be a region that is excavated to a certain depth along an edge of the first side plate 1300. The first groove 1310 may be a region that is excavated to a certain depth along an edge of the first side surface plate 1300 facing the plurality of battery modules 100. A first gasket 2000 may be located in the first groove 1310.

The first gasket 2000 is a member that is further located the first side surface plate 1300, and when the first side surface plate 1300 is combined with other elements constituting the battery pack 1000, the degree of sealing can be improved and thus, the waterproof and dustproof performance of the battery pack 1000 can be improved.

The second side surface plate 1400 may be a plate that covers the front and rear surfaces of the plurality of battery modules 100. The upper edge of the second side surface plate 1400 corresponds to one edge of the upper plate 1200, the lower edge of the second side surface plate 1400 corresponds to one edge of the lower plate 1100, and both side edges of the second side surface plate 1400 correspond to one edge of the two first side surface plates 1400, respectively, which can be fastened using a fastening member or coupled by a method such as welding.

The second side surface plate 1400 may include a second groove 1410 to which the second gasket 3000 is mounted. The second groove 1410 may be a region that is excavated to a certain depth along the edge of the second side plate 1400. A second gasket 3000 may be provided in the second groove 1410 of the second side plate 1400.

The second gasket 3000 is a member that is further located on the second side plate 1400, and when the second side surface plate 1400 is combined with other components constituting the battery pack 1000, the degree of sealing can be improved and the waterproof and dustproof performance of the battery pack 1000 can be improved.

When the first side surface plate 1300 and the second side surface plate 1400 are coupled, one edge of the first side surface plate 1300 and one edge of the second side surface plate 1400 come into contact. In this case, the first gasket 2000 and the second gasket 3000 may be located to contact and overlap with each other.

In this figure, the first gasket 2000 is illustrated as being mounted to the first groove 1310 of the first side surface plate 1300, but this is only one example and is not limited thereto. The first gasket 2000 may be mounted to grooves of the lower plate 1100, the upper plate 1200 and/or the second side surface plate 1400.

In this figure, the second gasket 3000 is illustrated as being provided in the second groove 1410 of the second side surface plate 1400, but this is only one example and is not limited thereto. The second gasket 3000 may be provided along edges of the lower plate 1100, the upper plate 1200 and/or the first side surface plate 1300.

The lower plate 1100, the upper plate 1200, the first side surface plate 1300, and the second side surface plate 1400 may be made of a material having stiffness. Therefore, it is possible to protect the plurality of battery modules 100 and electrical components connected thereto from external physical impact.

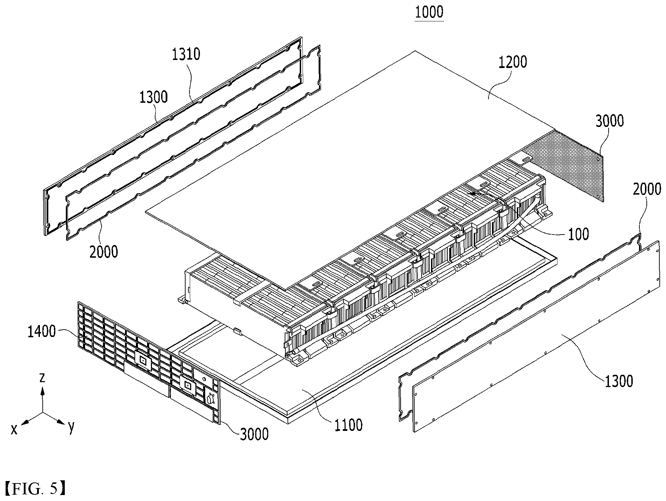

Fig. 5 is a diagram showing a first gasket located on one surface of a battery pack case.

Referring to Fig. 5, a first side surface plate 1300, which is an element constituting a battery pack case, includes a first groove 1310, and a first gasket 2000 is mounted in the first groove 1310. The first gasket 2000 serves to improve the degree of sealing of the battery pack and thus prevent moisture or dust from entering the battery pack from the outside.

The first gasket 2000 may be provided along an edge of the first side plate 1300. The first gasket 2000 may be provided in the first groove 1310 that is excavated to a certain depth along the edge of the first side plate 1300. The first gasket 2000 may be fitted into the first groove 1310.

The shape of the first gasket 2000 may correspond to the shape of an edge of the first side surface plate 1300. The shape of the first gasket 2000 may correspond to the shape of the first groove 1310 of the first side surface plate 1300. The width of the first gasket 2000 may be smaller than the width of the first groove 1310 or may correspond to the width of the first groove 1310. The height of the first gasket 2000 may be higher than the height of the first groove 1310 or may correspond to the height of the first groove 1310.

The first gasket 2000 may be made of an elastic material. For example, the first gasket 2000 may be made of a rubber. Therefore, when pressure is applied to the first gasket 2000, the shape of the first gasket 2000 may change as pressure is applied. For example, when pressure is applied to the first gasket 2000, the shape of the gasket 2000 mounted on the first groove 1310 may be changed so that no empty space may be formed in the first groove 1310. Therefore, it is possible to prevent moisture or dust from entering the battery pack from the outside, thereby improving the waterproof and dustproof performance of the battery pack.

In this figure, the first gasket 2000 is illustrated as being mounted on one surface of the first side plate 1300, but this is only one embodiment and is not limited thereto, and may be located if it is one surface constituting the battery pack case.

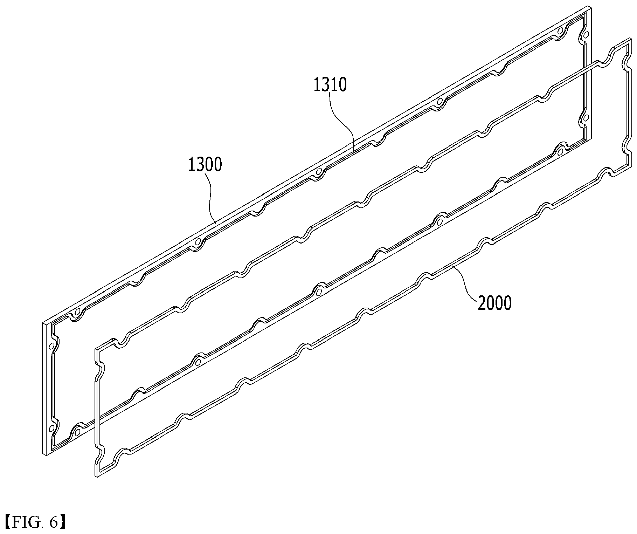

Fig. 6 is a diagram showing a second gasket located on one surface of the battery pack case.

Referring to Fig. 6, a second gasket 3000 is mounted along an edge of a second side plate 1400, which is an element constituting a battery pack case. The second gasket 3000 serves to improve the degree of sealing of the battery pack and thus prevent moisture, dust or the like from entering the battery pack from the outside.

The second gasket 3000 may be provided along an edge of the second side surface plate 1400. The second gasket 3000 may be provided in the second groove 1410 that is excavated to a certain depth along the edge of the second side plate 1400. The second gasket 3000 is a dispensing type, and may be formed by being applied along the second groove 1410 of the second side plate 1400 and then cured.

The shape of the second gasket 3000 may correspond to the edge shape of the second side surface plate 1400. The width of the second gasket 3000 may be smaller than the thickness of the second side surface plate 1400 or may correspond to the thickness of the second side surface plate 1400. The width of the second gasket 3000 may be smaller than the width of the groove of the second side plate 1400 or may correspond to the width of the groove of the second side surface plate 1400. The height of the second gasket 3000 may correspond to the height of the groove of the second side surface plate 1400.

The second gasket 3000 may be made of a resin. For example, the second gasket 3000 may be made of a resin or the like. For example, the second gasket 3000 may be formed of a CIPG (Cured In Place Gasket) material. The CIPG material may be a material that hardens like rubber and changes to a solid state when a liquid material is applied and then cured. The CIPG material has high elastic recovery, and thus, when pressure is applied to the second gasket 3000, the shape may change as the pressure is applied. Therefore, when the second side surface plate 1400 is coupled with other components constituting the battery pack, it serves to fill the gap between elements constituting the battery pack while the shape of the second gasket 3000 changes, whereby it is possible to prevent moisture, dust or the like entering with the battery pack from the outside, thereby improving the waterproof and dustproof performance of the battery pack.

Further, in this figure, the second gasket is illustrated as being provided along the edge of the second side plate 1400, but this is only one embodiment and is not limited thereto, and can be located if it is one surface constituting the battery pack case.

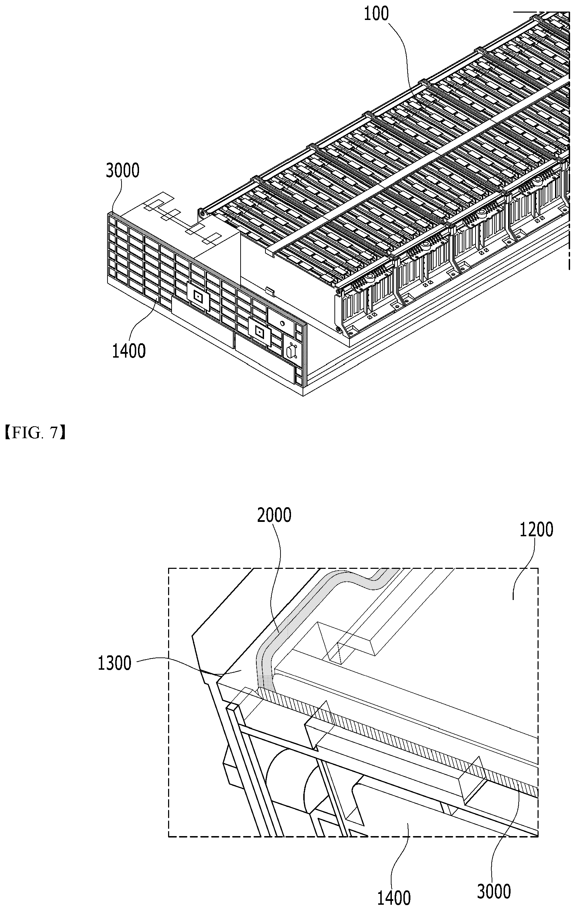

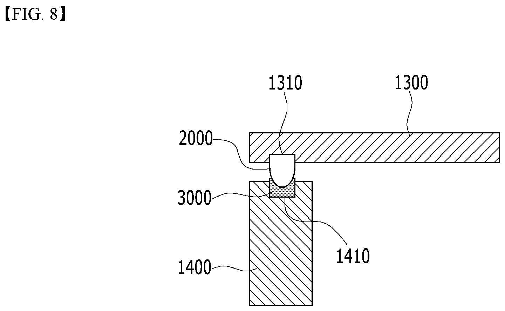

Fig. 7 is a diagram showing a state in which plates constituting the battery pack of Fig. 4 are coupled. Fig. 8 is a diagram schematically showing a cross section in which plates constituting the battery pack of Fig. 7 are coupled.

Referring to Figs. 7 and 8, one edge of a first side surface plate 1300 and a second side surface plate 1400 constituting a battery pack according to an embodiment of the present disclosure may be located while contacting each other. In this case, the first gasket 2000 provided along the first groove 1310 of the first side surface plate 1300 and the second gasket 3000 provided along the second groove 1410 of the second side surface plate 1400 may be located in contact with each other.

The first gasket 2000 may have larger elastic hardness than the second gasket 3000. Therefore, when the first side surface plate 1300 and the second side surface plate 1400 are coupled, pressure is applied to each of the first gasket 2000 and the second gasket 3000. In this case, the degree of shape change of the second gasket 3000 may be larger than that of the first gasket 2000. That is, the first gasket 2000 and the second gasket 3000 may be coupled while being engaged without any assembly tolerance. Therefore, unlike conventional battery packs (see Figs. 1 and 2), there is no assembly tolerance as compared to the case where the battery pack is configured by contacting the first gaskets 2000 made of an elastic material such as rubber, so that the possibility of moisture, dust or the like entering the battery pack from the outside can be reduced. That is, the waterproof and dustproof performance of the battery pack can be improved without being affected by the assembly condition.

In this figure, when the first side surface plate 1300 and the second side surface plate 1400 are coupled, only the waterproof structure at one overlapping edge is specifically described, but this is only one example, and can also be applied to the three-sided junction structure of each plate constituting the battery pack.

The above-mentioned battery pack can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which also falls within the scope of the present disclosure.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

1000: battery pack
1100: lower plate
1200: upper plate
1300: first side surface plate
1400: second side surface plate
2000: first gasket
3000: second gasket

## Claims

1. A battery pack comprising:
a plurality of battery modules; and
a pack case that houses the plurality of battery modules, and includes a first plate provided while covering one surface of the plurality of battery modules and a second plate provided while covering the other surface of the plurality of battery modules,
wherein a first gasket is located along an edge of the first plate,
wherein a second gasket is located along an edge of the second plate, and
wherein the first gasket and the second gasket are located to overlap each other in a region where one edges of the first plate and the second plate come into contact with each other.

2. The battery pack according to claim 1, wherein:
the first gasket and the second gasket have mutually different elastic hardness.

3. The battery pack according to claim 2, wherein:
the elastic hardness of the first gasket are larger than the elastic hardness of the second gasket.

4. The battery pack according to claim 1, wherein:
a degree of shape change of the first gasket is smaller than a degree of shape change of the second gasket.

5. The battery pack according to claim 1, wherein:
the first gasket is fitted into a first groove that is excavated to a certain depth along an edge of the first plate.

6. The battery pack according to claim 5, wherein:
a shape of the first gasket corresponds to a shape of an edge of the first plate.

7. The battery pack according to claim 5, wherein:
the shape of the first gasket corresponds to a shape of the first groove of the first plate.

8. The battery pack according to claim 1, wherein:
the first gasket is made of an elastic material.

9. The battery pack according to claim 8, wherein:
the first gasket is made of a rubber.

10. The battery pack according to claim 1, wherein:
the second gasket is provided in a second groove that is excavated to a certain depth along an edge of the second plate.

11. The battery pack according to claim 10, wherein:
the second gasket is formed by being applied to the second groove and then cured.

12. The battery pack according to claim 10, wherein:
the second gasket corresponds to a shape of the second groove.

13. The battery pack according to claim 1, wherein:
the second gasket is made of a resin.

14. The battery pack according to claim 1, wherein:
the second gasket is made of a CIPG (Cured In Place Gasket) material.

15. A device comprising the battery pack as set forth in claim 1.
